# EUROPÄISCHE PATENTSCHRIFT

(11) **EP 3 441 840 B1**
(45) Veröffentlichungstag und Bekanntmachung des Hinweises auf die Patenterteilung: **01.07.2020**
(21) Anmeldenummer: 18187219.3
(22) Anmeldetag: 03.08.2018
(51) Int. Cl.: G05D 1/00, G05D 1/02

(54) **VERFAHREN ZUM BETRIEB EINES SICH SELBSTTÄTIG FORTBEWEGENDEN REINIGUNGSGERÄTES**
METHOD FOR OPERATING A SELF-PROPELLED CLEANING DEVICE
PROCÉDÉ DE FONCTIONNEMENT D'UN APPAREIL DE NETTOYAGE EN MOUVEMENT DE MANIÈRE AUTOMATIQUE

(30) Priorität: 11.08.2017 DE 102017118383
(43) Veröffentlichungstag der Anmeldung: 13.02.2019
(73) Patentinhaber: Vorwerk & Co. Interholding GmbH, 42275 Wuppertal (DE)
(72) Erfinder: Brede, Maike, 58454 Witten (DE); Hahn, Pia, 58332 Schwelm (DE); Hillen, Lorenz, 42287 Wuppertal (DE); Isenberg, Gerhard, 50668 Köln (DE); Windorfer, Harald, 40822 Mettmann (DE)
(74) Vertreter: Müller, Enno

(56) Entgegenhaltungen:
- EP-A2- 2 330 471
- DE-A1-102015 100 419
- US-A1- 2014 207 281
- US-A1- 2015 032 260

## Beschreibung

### Gebiet der Technik

Die Erfindung betrifft ein Verfahren zum Betrieb eines sich selbsttätig innerhalb einer Umgebung fortbewegenden Reinigungsgerätes, wobei das Reinigungsgerät eine Fläche nach einem vorgegebenen Arbeitsplan reinigt, wobei mindestens ein Verschmutzungsgrad der Fläche ermittelt wird und eine Reinigungsaufgabe in Abhängigkeit von dem Verschmutzungsgrad gesteuert wird, wobei der Verschmutzungsgrad in eine mit Positionsinformationen der Umgebung verknüpfte Karte eingetragen wird, wobei ein Nutzer eine Bearbeitung der Karte vornimmt, nämlich in der Karte Flächenteilbereiche der Fläche definiert und mindestens einem Flächenteilbereich manuell eine Reinigungsaufgabe des Reinigungsgerätes zuweist.

Des Weiteren betrifft die Erfindung ein sich selbsttätig innerhalb einer Umgebung fortbewegendes Reinigungsgerät, welches ausgebildet ist, eine Fläche nach einem definierten Arbeitsplan zu reinigen, wobei das Reinigungsgerät eine Detektionseinrichtung zur Detektion eines Verschmutzungsgrades der Fläche aufweist, und wobei das Reinigungsgerät eingerichtet ist, auf eine mit Positionsinformationen der Umgebung verknüpfte Karte zuzugreifen.

### Stand der Technik

Reinigungsgeräte der vorgenannten Art sowie Verfahren zu deren Betrieb sind im Stand der Technik bekannt.

Bei den Reinigungsgeräten kann es sich beispielsweise um mobile Roboter handeln, welche selbständig eine Saugaufgabe und/oder Wischaufgabe innerhalb einer Umgebung ausführen können.

Die Veröffentlichungen DE 10 2011 000 536 A1 und DE 10 2008 014 912 A1 offenbaren beispielsweise Verfahren im Zusammenhang mit selbsttätig verfahrbaren Saug- und/oder Reinigungsrobotern zur Reinigung von Fußböden. Die Roboter sind mit Abstandssensoren ausgestattet, welche Abstände zu Hindernissen, wie beispielsweise Möbelstücken oder Raumbegrenzungen, messen können. Aus den gemessenen Abstandsdaten wird eine Umgebungskarte erstellt, anhand welcher eine Fortbewegungsroute des Roboters geplant werden kann, die eine Kollision mit Hindernissen vermeidet. Die Abstandssensoren arbeiten bevorzugt berührungslos, beispielsweise mit Hilfe von Licht und/oder Ultraschall. Es ist des Weiteren bekannt, den Roboter mit Mitteln zur Rundum-Abstandsmessung zu versehen, beispielsweise mit einem optischen Triangulationssystem, welches auf einer um eine Vertikalachse rotierenden Plattform oder dergleichen angeordnet ist. Die erfassten Abstandsdaten werden mittels einer Recheneinrichtung des Roboters zu einer Umgebungskarte verarbeitet und gespeichert, sodass im Zuge eines Arbeitsbetriebs auf diese Umgebungskarte zum Zwecke der Orientierung zurückgegriffen werden kann.

Aus der EP 1 967116 B2 ist es des Weiteren bekannt, den Betrieb eines Reinigungsgerätes automatisch zu steuern, beispielsweise indem eine Detektionseinrichtung des Reinigungsgerätes einen Verschmutzungsgrad der zu reinigenden Fläche erkennt und das Reinigungsverfahren daraufhin automatisch so angepasst wird, dass eine Reinigungsintensität eines Bereiches der Umgebung in einem nachfolgenden Reinigungszyklus in Abhängigkeit von dem Verschmutzungsgrad gesteuert wird.

Zudem ist es bekannt, dass ein Nutzer eine Verschmutzung einer zu reinigenden Fläche erkennt und das Reinigungsgerät manuell, beispielsweise über eine Fernbedienung, zu der Verschmutzung steuert, um dort eine Spotreinigung mit vordefinierten Parametern auszuführen.

Des Weiteren ist es aus der DE 10 2015 100 419 A1 bekannt, dass ein Nutzer mittels eines externen Endgerätes einen Flächenteilbereich in einer Umgebungskarte eines Reinigungsgerätes auswählen und diesem eine Reinigungsaufgabe zuweisen kann. Beispielsweise kann der Nutzer direkt aus einem angezeigten grafischen Abbild einer Umgebung eine bestimmte Stelle einer Bodenfläche, die als noch unbearbeitet und/oder verschmutzt hervorgehoben dargestellt ist, durch Antippen auswählen.

Die EP 2 330 471 A2 offenbart des Weiteren ein Verfahren zur Steuerung eines Roboters, wobei in dem Roboter eine Umgebungskarte bzw. ein vorgegebener Verfahrweg erstellt und abgespeichert wird, wobei ein zur Steuerung des Roboters verwendetes Außengerät die Karte des Roboters empfängt und dessen Position innerhalb der Karte anzeigt. Mittels des Außengerätes kann ebenfalls eine Karte erstellt und an den Roboter übertragen werden. Des Weiteren kann der Roboter mittels des Außengerätes hinsichtlich seines Verfahrweges und/oder Reinigungsablaufes gesteuert werden.

Die US 2015/0032260 A1 offenbart einen mittels eines Außengerätes steuerbaren Reinigungsroboter, wobei auf dem Außengerät durch einen Nutzer Teilbereiche der Umgebung für eine Reinigung ausgewählt werden können. Dafür kann eine Markierung eines Flächenteilbereiches an eine zu reinigende Position gezogen werden.

Die US 2014/0207281 A1 offenbart ein Verfahren, bei welchem ein Nutzer einem Reinigungsgerät auf einem Bildschirm Reinigungsaufgaben für definierte Flächen zuweisen kann.

Nachteilig bei den bekannten Verfahren ist, dass Flächenteilbereiche einer Umgebung des Roboters automatisch von einer Steuereinrichtung des Reinigungsgerätes festgelegt werden, ohne dass der Nutzer eine individuelle Möglichkeit zur Beeinflussung hat.

### Zusammenfassung der Erfindung

Ausgehend von dem vorgenannten Stand der Technik ist es daher Aufgabe der Erfindung, den Reinigungsbetrieb des Reinigungsgerätes flexibler und individueller zu gestalten.

Zur Lösung dieser Aufgabe wird vorgeschlagen, dass der Nutzer eine Position der Flächenteilbereiche definiert und zusätzlich eine Form und/oder Größe der Flächenteilbereiche festlegt.

Erfindungsgemäß definiert der Nutzer eine Position und zusätzlich eine Form und/oder Größe der Flächenteilbereiche. Der Nutzer kann somit in der Karte einen Flächenteilbereich, welcher durch seine Position definiert ist, zusätzlich in Bezug auf dessen Form und/oder Größe festlegen. Dafür wählt der Nutzer beispielsweise einen Bereich in der Karte aus und weist diesem eine geometrische Form, wie beispielsweise ein Quadrat, ein Rechteck, ein Polygon, ein Dreieck, einen Kreis oder eine freie Form zu. Des Weiteren oder alternativ kann eine Größe des Flächenteilbereiches definiert werden.

Der Nutzer kann aktiv in eine Reinigungsplanung des Reinigungsgerätes eingreifen und das Reinigungsgerät auf der Grundlage des detektierten Verschmutzungsgrades steuern. Dadurch liegt die Verantwortung für die Erfüllung der Reinigungsaufgaben bei dem Nutzer. Insbesondere kann der Nutzer individuell festlegen, wie intensiv ein Flächenteilbereich der Fläche bearbeitet werden soll, beispielsweise um Beschädigungen an empfindlichen Bodenbelägen zu vermeiden. Das Reinigungsgerät reinigt einen oder mehrere Flächenteilbereiche einer Umgebung, beispielsweise einen Flächenteilbereich eines Raums oder einer Wohnung, wobei das Reinigungsgerät die Merkmale der Umgebung erfasst und kartiert. Dazu werden beispielsweise Abstände zu Hindernissen innerhalb der Umgebung gemessen, die anschließend zu Positionsinformationen der Hindernisse gewandelt und in der Karte eingetragen werden. Die Karte kann eine Umgebungskarte des Reinigungsgerätes sein, welche aus Abstandsmessdaten der Umgebung erstellt wurde und anhand welcher sich das Reinigungsgerät zur Navigation und Selbstlokalisierung orientiert. Alternativ kann die Karte auch eine zu der Umgebungskarte separate Karte sein, welche mit den in der Umgebungskarte gespeicherten Positionsinformationen verknüpft ist. Das Ermitteln des Verschmutzungsgrades und/oder das Eintragen des Verschmutzungsgrades in die Karte kann manuell durch einen Nutzer oder automatisch durch Einrichtungen des Reinigungsgerätes erfolgen.

Der Verschmutzungsgrad kann über eine Vielzahl von Reinigungszyklen eines Reinigungsbetriebs detektiert werden. Die Verschmutzung der Fläche kann beispielsweise Staub, Haare, Flüssigkeiten und ähnliches beinhalten. Das Reinigungsgerät erstellt aus dem Detektionsergebnis eine Karte, in der vorzugsweise Verschmutzungsgrade mehrerer Flächenteilbereiche dargestellt sind. Diese Karte kann entweder die Umgebungskarte des Reinigungsgerätes sein, in welcher zusätzlich zu den räumlichen Informationen auch die Verschmutzungsgrade eingetragen werden, oder eine zu der Umgebungskarte separate Karte, welche mit der Umgebungskarte verknüpft wird. Den Verschmutzungsgraden werden dadurch Koordinaten der Umgebungskarte zugeordnet. Anschließend wird dem Nutzer eine die Verschmutzungsgrade enthaltende Karte angezeigt. Der Nutzer kann auf der Basis dieser Karte einen oder mehrere Flächenteilbereiche definieren und eine für den jeweiligen Flächenteilbereich gewünschte Reinigungsaufgabe definieren.

Es kann vorgesehen sein, dass eine Detektionseinrichtung des Reinigungsgerätes einen Verschmutzungsgrad der Fläche detektiert. Die Detektionseinrichtung kann den Verschmutzungsgrad kontinuierlich beobachten oder Verschmutzungsgrade in festgelegten oder zufälligen Abständen detektieren. Insbesondere können Verschmutzungsgrade in mehreren Flächenteilbereichen der Fläche detektiert werden, wobei der Verschmutzungsgrad bestimmten Positionen in der Karte zugeordnet wird. Der Verschmutzungsgrad kann mittels einer als Bilderfassungseinrichtung ausgebildeten Detektionseinrichtung detektiert werden. Die Detektionseinrichtung nimmt beispielsweise Bilder der Fläche auf und vergleicht diese mit Referenzbildern, deren Verschmutzungsgrad bekannt ist. Alternativ kann die Detektionseinrichtung jedoch auch ein Partikeldetektor sein, welcher Partikel innerhalb eines von einer Motor-Gebläse-Einheit angesaugten Saugluftstroms misst. Dem Verschmutzungsgrad können des Weiteren auch Informationen über eine Verschmutzungsart, eine Verschmutzungsverteilung, eine Konsistenz der Verschmutzung oder weiteres zugeordnet sein.

Des Weiteren wird vorgeschlagen, dass eine oder mehrere Reinigungstätigkeiten in Bezug auf Ausführungszeitpunkt, Wiederholungsfrequenz und/oder Wiederholungsanzahl definiert werden. Beispielsweise kann der Nutzer für die ausgewählten Flächenteilbereiche eine Wiederholungsfrequenz festlegen. Dies kann beispielsweise in Form eines Arbeitsplans geschehen, welcher wiederkehrende Reinigungszeiten festlegt, beispielsweise täglich um 12:00 Uhr, täglich um 8:00 Uhr und 20:00 Uhr, wöchentlich Freitags um 15:00 Uhr und dergleichen. Des Weiteren können auch Wiederholungen von Reinigungstätigkeiten definiert werden, unter anderem auch in Form einer festgelegten Anzahl von Überquerungen eines Flächenteilbereiches durch das Reinigungsgerät.

Zudem kann vorgesehen sein, dass der Nutzer einem Flächenteilbereich, welcher eine Verschmutzung über einem Grenzwert aufweist, eine gegenüber einer Standardwiederholungsfrequenz erhöhte Wiederholungsfrequenz und/oder eine gegenüber einer Standardreinigungsintensität erhöhte Reinigungsintensität zuweist, und/oder dass der Nutzer einem Flächenteilbereich, welcher eine Verschmutzung unter einem Grenzwert aufweist, eine gegenüber einer Standardwiederholungsfrequenz erniedrigte Wiederholungsfrequenz und/oder eine gegenüber einer Standardreinigungsintensität erniedrigte Reinigungsintensität zuweist.. Gemäß dieser Ausgestaltung können für einen Reinigungsbetrieb des Reinigungsgerätes somit grundsätzlich ein oder mehrere Standardparameter festgelegt sein. Diese Standardparameter beinhalten beispielsweise eine Standardwiederholungsfrequenz für einen wiederkehrenden Reinigungsbetrieb und/oder eine Standardreinigungsintensität, mit welcher ein Flächenteilbereich gereinigt wird. Die Standardreinigungsintensität kann beispielsweise über eine bestimmte Anzahl von Reinigungszyklen während des Reinigungsbetriebs in dem bestimmten Flächenteilbereich definiert sein oder über eine Reinigungsintensität, die von einem Reinigungselement des Reinigungsgerätes an dem Flächenteilbereich angewandt wird. Insbesondere kann die Reinigungsintensität auch durch eine Saugleistung einer Motor-Gebläse-Einheit des Reinigungsgerätes bestimmt sein. Eine bekannte Verschmutzung wird somit mit einem Grenzwert verglichen, wobei der Nutzer daraufhin Maßnahmen zur Festlegung einer Reinigungsfrequenz und/oder Reinigungsintensität trifft. Insbesondere kann eine Auswerteeinrichtung des Reinigungsgerätes einen Vergleich mit definierten Grenzwerten durchführen und dann eine Mitteilung, insbesondere auch einen Vorschlag über eine Anpassung der Standardparameter, an den Nutzer übermitteln. Bevorzugt kann das Reinigungsgerät dem Nutzer eine bestimmte erhöhte/erniedrigte Reinigungsfrequenz und/oder erhöhte/erniedrigte Reinigungsintensität vorschlagen, welche der Nutzer durch Bestätigung für den betreffenden Flächenteilbereich festlegen kann.

Des Weiteren wird vorgeschlagen, dass der Nutzer einen Arbeitsplan erstellt, welcher zeitlich aufeinanderfolgende Reinigungsaufgaben in mehreren Flächenteilbereichen beinhaltet. Der Arbeitsplan definiert somit auch eine Mehrzahl von Reinigungstätigkeiten, die das Reinigungsgerät zeitlich nacheinander auszuführen hat. Beispielsweise kann der Arbeitsplan aufeinanderfolgende Reinigungsschritte in benachbarten Flächenteilbereichen aufweisen. Des Weiteren ist es auch möglich, dass der Arbeitsplan beispielsweise eine Reinigung mit gegenüber einem Standardmodus erhöhter/erniedrigter Reinigungsintensität an entfernt voneinander positionierten Flächenteilbereichen der Umgebung vorsieht. Dies kann beispielsweise eine sogenannte Spotreinigung einzelner Flächenteilbereiche sein, wobei der Nutzer zuvor die Flächenteilbereiche für eine solche Spotreinigung definiert hat. Die Flächenteilbereiche werden in einer bestimmten zeitlichen Reihenfolge und mit festgelegten Parametern bearbeitet. Erst nach vollständiger Abarbeitung des Arbeitsplans kehrt das Reinigungsgerät beispielsweise in eine Ausgangsstellung zurück.

Alternativ kann vorgesehen sein, dass eine Reinigungstätigkeit in einem ersten Flächenteilbereich zeitlich und organisatorisch unabhängig von Reinigungstätigkeiten in anderen Flächenteilbereichen ausgeführt wird. Gemäß dieser Ausgestaltung ist das Reinigungsgerät nur mit einer einzigen Reinigungstätigkeit beauftragt, die somit vollkommen unabhängig, d.h. zeitlich und organisatorisch unabhängig, von anderen Einsätzen des Reinigungsgerätes gesteuert werden kann. Gemäß dieser Ausführung bewegt sich das Reinigungsgerät nur zu einem einzigen Flächenteilbereich der Umgebung und führt dort eine Reinigung aus.

Des Weiteren wird vorgeschlagen, dass die Karte dem Nutzer auf einem externen Endgerät angezeigt wird und der Nutzer über das externe Endgerät eine Bearbeitung der Karte vornimmt. Das externe Endgerät ist besonders vorzugsweise ein mobiles Endgerät des Nutzers, insbesondere ein Mobiltelefon, ein Tablet-Computer, ein Laptop oder ähnliches. Die Karte wird dem Nutzer insbesondere auf einem Display, besonders bevorzugt einem Touch-Screen, des externen Endgerätes angezeigt. Über eine Eingabeschnittstelle des externen Endgerätes, eine Tastatur oder den Touch-Screen kann der Nutzer eine Eingabe an das externe Endgerät übermitteln und/oder eine Bearbeitung der Karte vornehmen. Die Bearbeitung der Karte kann insbesondere die Definition von Flächenteilbereichen beinhalten sowie die Zuordnung einer bestimmten Reinigungsaufgabe für diesen Flächenteilbereich. Dafür kann der Nutzer beispielsweise einen Bereich in der Karte auswählen und, wie zuvor erläutert, mindestens eine Eigenschaft, wie Form und/oder Größe, definieren sowie eine Reinigungstätigkeit in Bezug auf deren Ausführungszeitpunkt, Wiederholungsfrequenz und/oder Wiederholungsanzahl festlegen. Die von dem Nutzer gewählten Parameter werden dann von dem externen Endgerät an das Reinigungsgerät übermittelt. Hierzu besteht vorzugsweise eine drahtlose Kommunikationsverbindung, insbesondere WLAN, Bluetooth oder ähnliches.

Es wird des Weiteren vorgeschlagen, dass diejenigen Flächenteilbereiche, welchen eine Reinigungsaufgabe von dem Nutzer zugewiesen wurde, zeitlich vor Flächenteilbereichen, welchen keine Reinigungsaufgabe zugewiesen wurde, gereinigt werden. In dem Fall, dass der Nutzer für einen Flächenteilbereich eine bestimmte Reinigungsaufgabe definiert hat, reinigt das Reinigungsgerät bevorzugt zunächst die von dem Nutzer vorgegebenen Flächenteilbereiche. Erst danach werden die übrigen Flächenteilbereiche der Fläche gereinigt. Im Rahmen eines Arbeitsplans kann des Weiteren eine bestimmte Reihenfolge für die bei der Zuweisung berücksichtigten Flächenteilbereiche oder auch für Flächenteilbereiche, welchen keine Reinigungsaufgabe zugewiesen wurde, erstellt werden.

Es kann des Weiteren vorgesehen sein, dass verhindert wird, dass eine einem Flächenteilbereich zugewiesene Reinigungsaufgabe ohne Zutun des Nutzers geändert, gelöscht oder überschrieben wird. Somit kann verhindert werden, dass ohne Wissen des Nutzers eine automatische Anpassung einer Reinigungstätigkeit erfolgt, wenn die Detektionseinrichtung beispielsweise einen veränderten Verschmutzungsgrad detektiert. Vor jeder Änderung einer Reinigungstätigkeit wird zumindest das Einverständnis des Nutzers eingeholt. Erst dann kann eine Reinigungsaufgabe aufgrund beispielsweise eines geänderten Verschmutzungsgrades angepasst werden.

Neben dem zuvor beschriebenen Verfahren zum Betrieb eines Reinigungsgerätes wird mit der Erfindung des Weiteren ein sich selbsttätig innerhalb einer Umgebung fortbewegendes Reinigungsgerät vorgeschlagen, welches ausgebildet ist, eine Fläche nach einem vorgegebenen Arbeitsplan zu reinigen, wobei das Reinigungsgerät eine Detektionseinrichtung zur Detektion eines Verschmutzungsgrades der Fläche aufweist, und wobei das Reinigungsgerät eingerichtet ist, auf eine mit Positionsinformationen der Umgebung verknüpfte Karte zuzugreifen. Erfindungsgemäß ist das Reinigungsgerät zur Ausführung eines zuvor beschriebenen Verfahrens ausgebildet. Dies beinhaltet, dass das Reinigungsgerät eine Eingabeschnittstelle zum Empfang von Eingaben des Nutzers aufweist, welche einen Flächenteilbereich der Fläche in der Karte definieren und mindestens einem Flächenteilbereich eine Reinigungsaufgabe zuweisen. Eine Steuereinrichtung des Reinigungsgerätes ist zudem so ausgebildet, dass der von dem Nutzer definierte Flächenteilbereich in der Karte eingetragen wird und eine der Reinigungsaufgabe entsprechende Reinigungstätigkeit gesteuert wird. Das Reinigungsgerät kann des Weiteren einen Speicher aufweisen, welcher beispielsweise Referenzwerte für Verschmutzungsgrade eines oder mehrerer Flächenteilbereiche enthält. Diese Referenzwerte können beispielsweise mit bei Vorliegen bestimmter Verschmutzungsgrade anzuwendenden Reinigungsfrequenzen und/oder Reinigungsintensitäten des Reinigungsgerätes verknüpft sein. Des Weiteren gelten die zuvor in Bezug auf das Verfahren beschriebenen Vorteile und Merkmale entsprechend auch für das erfindungsgemäße Reinigungsgerät.

### Kurze Beschreibung der Zeichnungen

Im Folgenden wird die Erfindung anhand von Ausführungsbeispielen näher erläutert. Es zeigen:
- Fig. 1: eine perspektivische Ansicht eines sich selbsttätig fortbewegenden Reinigungsgerätes,
- Fig. 2: ein externes Endgerät mit einer auf einem Display angezeigten Karte, welche Flächenteilbereiche einer Umgebung enthält.

### Beschreibung der Ausführungsformen

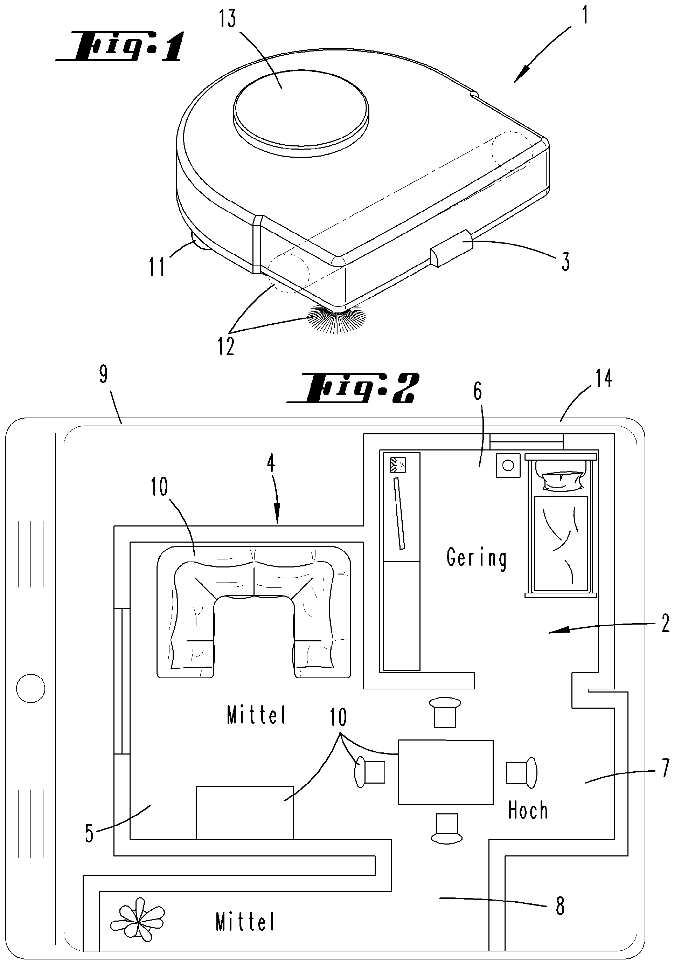

Figur 1 zeigt ein Reinigungsgerät 1, welches hier als Saugroboter ausgestaltet ist. Das Reinigungsgerät 1 verfügt über elektromotorisch angetriebene Räder 11, mit deren Hilfe sich das Reinigungsgerät 1 innerhalb einer Umgebung fortbewegen kann. Des Weiteren verfügt das Reinigungsgerät 1 über Reinigungselemente 12, nämlich hier eine seitlich über ein Gehäuse des Reinigungsgerätes 1 hervorstehende Seitenbürste sowie eine Borstenwalze, welche um eine Rotationsachse rotierbar ist. Die Borstenwalze ist in der dargestellten üblichen Betriebsstellung des Reinigungsgerätes 1 - bezogen auf ihre Längserstreckung - horizontal orientiert, d.h. im Wesentlichen parallel zu einer zu reinigenden Fläche 2. Die Reinigungselemente 12 dienen zum Lösen von Schmutz von der zu reinigenden Fläche 2. Des Weiteren weist das Reinigungsgerät 1 im Bereich der Reinigungselemente 12 eine nicht weiter dargestellte Saugmundöffnung auf, über welche mittels einer Motor-Gebläse-Einheit mit Sauggut beaufschlagte Luft in das Reinigungsgerät 1 eingesaugt werden kann. Für die Energieversorgung der einzelnen Elektrokomponenten des Reinigungsgerätes 1, beispielsweise für einen Elektromotor zum Antrieb der Räder 11, der Reinigungselemente 12 oder weiter darüber hinaus vorgesehene Elektronik, weist das Reinigungsgerät 1 einen nicht dargestellten, wieder aufladbaren Akkumulator auf.

Das Reinigungsgerät 1 weist darüber hinaus eine Abstandsmesseinrichtung 13 auf, welche hier beispielsweise eine Triangulationsmesseinrichtung beinhaltet. Die Abstandsmesseinrichtung 13 ist innerhalb des Gehäuses des Reinigungsgerätes 1 angeordnet und weist im Einzelnen eine Laserdiode auf, deren emittierter Lichtstrahl über eine Umlenkeinrichtung aus dem Gehäuse herausgeführt und um eine in der gezeigten Orientierung des Reinigungsgerätes 1 senkrechte Drehachse rotierbar ist, insbesondere mit einem Messwinkel von 360°. Dadurch ist eine Rundum-Abstandsmessung um das Reinigungsgerät 1 möglich. Die Abstandsmesseinrichtung 13 misst Abstände zu Hindernissen 10 innerhalb der Umgebung des Reinigungsgerätes 1, beispielsweise Abstände zu Möbelstücken oder Raumbegrenzungen.

Das Reinigungsgerät 1 verfügt zudem über eine Detektionseinrichtung 3, nämlich hier einen in Fahrtrichtung des Reinigungsgerätes 1 vorne angeordneten Staubsensor, welcher eine Verschmutzung eines aktuell von dem Reinigungsgerät 1 befahrenen Flächenteilbereiches 5, 6, 7, 8 detektieren kann. Der Staubsensor ist hier beispielsweise eine Bilderfassungseinrichtung, insbesondere eine Kamera, die Bilder der Flächenteilbereiche 5, 6, 7, 8 aufnimmt und diese mit Bildern einer Referenzverschmutzung vergleicht. Alternativ könnte es jedoch auch vorgesehen sein, dass die Detektionseinrichtung 3 beispielsweise ein Partikelsensor ist, welcher Partikel, insbesondere Staub und Schmutzpartikel, innerhalb eines von der Motor-Gebläse-Einheit des Reinigungsgerätes 1 angesaugten Saugluftstroms misst.

Figur 2 zeigt ein externes Endgerät 9, welches in Kommunikationsverbindung mit dem Reinigungsgerät 1 steht. Das externe Endgerät 9 ist hier beispielsweise ein Tablet-Computer. Das Reinigungsgerät 1 und das externe Endgerät 9 weisen ein drahtloses Kommunikationsmodul, beispielsweise ein WLAN-Modul, auf. Auf einem Display 14 des externen Endgerätes 9 ist eine Karte 4 der Umgebung des Reinigungsgerätes 1 dargestellt. Die Karte 4 ist hier eine Umgebungskarte des Reinigungsgerätes 1, welche eine Wohnung mit mehreren Räumen darstellt. Des Weiteren sind in der Karte 4 - zugeordnet einzelnen Flächenteilbereichen 5, 6, 7, 8 - Verschmutzungsgrade mit "gering", "mittel" und "hoch" verzeichnet.

Zur Erstellung der Karte 4 detektiert das Reinigungsgerät 1 mittels der Detektionseinrichtung 3 während einer Reinigungs- oder Erkundungsfahrt Verschmutzungsgrade der Umgebung und trägt diese in die Karte 4 ein. Das Reinigungsgerät 1 übermittelt die Karte 4 daraufhin an das externe Endgerät 9, wo die Karte 4 einem Nutzer auf dem Display 14 angezeigt wird. Der Nutzer kann in der Karte 4 einen oder mehrere Flächenteilbereichen 5, 6, 7, 8 auswählen und eine für diese Flächenteilbereiche 5, 6, 7, 8 gewünschte Reinigungsplanung, d.h. zumindest eine Reinigungsaufgabe, festlegen. Sofern der Nutzer überhaupt keine Eingabe in der Karte 4 vornimmt, vollzieht das Reinigungsgerät 1 beispielsweise Reinigungstätigkeiten gemäß einem Standard-Arbeitsplan. Sofern der Nutzer jedoch eine Vorgabe für einen oder mehrere ausgewählte Flächenteilbereiche 5, 6, 7, 8 macht, reinigt das Reinigungsgerät 1 zunächst die ausgewählten Flächenteilbereiche 5, 6, 7, 8 wie von dem Nutzer definiert und anschließend erst diejenigen Flächenteilbereiche 5, 6, 7, 8, welchen der Nutzer keine Reinigungsaufgabe zugewiesen hat.

Nachdem der Nutzer einen bestimmten Flächenteilbereich 5, 6, 7, 8 in der Karte 4 ausgewählt hat, weist er diesem eine Reinigungsaufgabe zu und definiert gegebenenfalls zusätzlich eine geometrische Form des Flächenteilbereiches 5, 6, 7, 8, wie beispielsweise Quadrat, Rechteck, Polygon, Dreieck und/oder Kreis, und/oder passt dessen Größe an. Zusätzlich kann der Nutzer für den jeweiligen Flächenteilbereich 5, 6, 7, 8 eine Reinigungsfrequenz für die gewünschte Reinigungstätigkeit definieren, beispielsweise eine tägliche Reinigung zu einer bestimmten Uhrzeit, eine wöchentlich wiederkehrende Reinigung, eine bestimmte Anzahl von Wiederholungen einer Reinigungstätigkeit auf dem jeweiligen Flächenteilbereich 5, 6, 7, 8 und dergleichen. Dabei vergleicht der Nutzer einen in der Karte 4 eingetragenen Verschmutzungsgrad mit entsprechenden Referenzwerten. Sofern die Verschmutzung beispielsweise den Wert "hoch" aufweist, kann der Nutzer eine Reinigungsintensität eines Reinigungselementes 12 des Reinigungsgerätes 1 festlegen, welche größer ist als eine üblicherweise von dem Reinigungselement 12 auf den Flächenteilbereich 5, 6, 7, 8 ausgeübte Reinigungsintensität.

Des Weiteren kann der Nutzer auch einen Arbeitsplan erstellen, welcher zeitlich aufeinanderfolgende Reinigungsaufgaben für mehrere Flächenteilbereiche 5, 6, 7, 8 enthält. Das Reinigungsgerät 1 arbeitet dann den erstellten Arbeitsplan vollständig ab, wobei die Flächenteilbereiche 5, 6, 7, 8 in einer definierten Reihenfolge nacheinander gereinigt werden. Dabei kann beispielsweise vorgesehen sein, dass der gemäß Figur 2 ein hohe Verschmutzung aufweisende Flächenteilbereich 7 vor den eine mittlere Verschmutzung aufweisenden Flächenteilbereichen 5 und 8 und dem eine geringe Verschmutzung aufweisenden Flächenteilbereich 6 gereinigt wird.

Des Weiteren empfiehlt es sich, dass ein von dem Nutzer erstellter Arbeitsplan oder eine einem Flächenteilbereich 5, 6, 7, 8 zugewiesene Reinigungsaufgabe nicht automatisch durch beispielsweise eine Steuereinrichtung des Reinigungsgerätes 1 geändert, gelöscht oder überschrieben wird, wenn die Detektionseinrichtung 3 aktuell beispielsweise von der Karte 4 abweichende Verschmutzungsgrade der Flächenteilbereiche 5, 6, 7, 8 detektiert. Vor einer Änderung des Arbeitsplans beziehungsweise der definierten Reinigungsaufgabe übermittelt das Reinigungsgerät 1 vorzugsweise zumindest eine Information an einen Nutzer, welche besonders bevorzugt auf dem Display 14 des externen Endgerätes 9 angezeigt wird. Des Weiteren kann auch vorgesehen sein, dass der Nutzer eine Aufforderung zur Bestätigung einer vorgeschlagenen Änderung des Arbeitsplans erhält. Daraufhin kann der Nutzer dann entscheiden, ob der Arbeitsplan beziehungsweise die Reinigungsaufgabe abgeändert werden soll oder nicht.

### Liste der Bezugszeichen

- 1: Reinigungsgerät
- 2: Fläche
- 3: Detektionseinrichtung
- 4: Karte
- 5: Flächenteilbereich
- 6: Flächenteilbereich
- 7: Flächenteilbereich
- 8: Flächenteilbereich
- 9: Externes Endgerät
- 10: Hindernis
- 11: Rad
- 12: Reinigungselement
- 13: Abstandsmesseinrichtung
- 14: Display

## Patentansprüche

1. Verfahren zum Betrieb eines sich selbsttätig innerhalb einer Umgebung fortbewegenden Reinigungsgerätes (1), wobei das Reinigungsgerät (1) eine Fläche (2) nach einem vorgegebenen Arbeitsplan reinigt, wobei mindestens ein Verschmutzungsgrad der Fläche (2) ermittelt wird und eine Reinigungsaufgabe in Abhängigkeit von dem Verschmutzungsgrad gesteuert wird, wobei der Verschmutzungsgrad in eine mit Positionsinformationen der Umgebung verknüpfte Karte (4) eingetragen wird, wobei ein Nutzer eine Bearbeitung der Karte (4) vornimmt, nämlich in der Karte (4) Flächenteilbereiche (5, 6, 7, 8) der Fläche (2) definiert und mindestens einem Flächenteilbereich (5, 6, 7, 8) manuell eine Reinigungsaufgabe des Reinigungsgerätes (1) zuweist, **dadurch gekennzeichnet, dass** der Nutzer eine Position der Flächenteilbereiche (5, 6, 7, 8) definiert und zusätzlich eine Form und/oder Größe der Flächenteilbereiche (5, 6, 7, 8) festlegt.

2. Verfahren nach Anspruch 1, **dadurch gekennzeichnet, dass** eine Detektionseinrichtung (3) des Reinigungsgerätes (1) einen Verschmutzungsgrad der Fläche (2) detektiert.

3. Verfahren nach einem der vorhergehenden Ansprüche, **dadurch gekennzeichnet, dass** eine oder mehrere Reinigungstätigkeiten in Bezug auf Ausführungszeitpunkt, Wiederholungsfrequenz und/oder Wiederholungsanzahl definiert werden.

4. Verfahren nach Anspruch 3, **dadurch gekennzeichnet, dass** der Nutzer einem Flächenteilbereich (5, 6, 7, 8), welcher eine Verschmutzung über einem Grenzwert aufweist, eine gegenüber einer Standardwiederholungsfrequenz erhöhte Wiederholungsfrequenz und/oder eine gegenüber einer Standardreinigungsintensität erhöhte Reinigungsintensität zuweist, und/oder dass der Nutzer einem Flächenteilbereich (5, 6, 7, 8), welcher eine Verschmutzung unter einem Grenzwert aufweist, eine gegenüber einer Standardwiederholungsfrequenz erniedrigte Wiederholungsfrequenz und/oder eine gegenüber einer Standardreinigungsintensität erniedrigte Reinigungsintensität zuweist.

5. Verfahren nach einem der Ansprüche 1 bis 4, **dadurch gekennzeichnet, dass** der Nutzer einen Arbeitsplan erstellt, welcher zeitlich aufeinanderfolgende Reinigungsaufgaben in mehreren Flächenteilbereichen (5, 6, 7, 8) beinhaltet.

6. Verfahren nach einem der Ansprüche 1 bis 4, **dadurch gekennzeichnet, dass** eine Reinigungstätigkeit in einem ersten Flächenteilbereich (5, 6, 7, 8) zeitlich und organisatorisch unabhängig von Reinigungstätigkeiten in anderen Flächenteilbereichen (5, 6, 7, 8) ausgeführt wird.

7. Verfahren nach einem der vorhergehenden Ansprüche, **dadurch gekennzeichnet, dass** die Karte (4) dem Nutzer auf einem externen Endgerät (9) angezeigt wird und der Nutzer über das externe Endgerät (9) eine Bearbeitung der Karte (4) vornimmt.

8. Verfahren nach einem der vorhergehenden Ansprüche, **dadurch gekennzeichnet, dass** diejenigen Flächenteilbereiche (5, 6, 7, 8), welchen eine Reinigungsaufgabe von dem Nutzer zugewiesen wurde, zeitlich vor Flächenteilbereichen (5, 6, 7, 8), welchen keine Reinigungsaufgabe zugewiesen wurde, gereinigt werden, und/oder dass verhindert wird, dass eine einem Flächenteilbereich (5, 6, 7, 8) zugewiesene Reinigungsaufgabe ohne Zutun des Nutzers geändert, gelöscht oder überschrieben wird.

9. Sich selbsttätig innerhalb einer Umgebung fortbewegendes Reinigungsgerät (1), welches ausgebildet ist, eine Fläche (2) nach einem vorgegebenen Arbeitsplan zu reinigen, wobei das Reinigungsgerät (1) eine Detektionseinrichtung (3) zur Detektion eines Verschmutzungsgrades der Fläche (2) aufweist, und wobei das Reinigungsgerät eingerichtet ist, auf eine mit Positionsinformationen der Umgebung verknüpfte Karte (4) zuzugreifen, **dadurch gekennzeichnet, dass** das Reinigungsgerät (1) zur Ausführung eines Verfahrens gemäß einem der vorhergehenden Ansprüche ausgebildet ist.

## Claims

1. A method for the operation of a cleaning appliance (1) automatically moving within an environment, wherein the cleaning appliance (1) cleans a surface (2) in accordance with a predetermined work schedule, wherein at least one level of contamination of the surface (2) is determined, and a cleaning task is controlled as a function of the level of contamination, wherein the level of contamination is entered on a map (4) associated with positional information of the environment, wherein a user undertakes editing of the map (4), that is to say, defines surface zones (5, 6, 7, 8) of the surface (2) in the map (4), and manually assigns a cleaning task of the cleaning appliance (1) to at least one surface zone (5, 6, 7, 8), **characterised in that** the user defines a position of the surface zones (5, 6, 7, 8) and sets in addition a shape and/or size, of the surface zones (5, 6, 7, 8).

2. The method in accordance with claim 1, **characterised in that** a detection device (3) of the cleaning appliance (1) detects a level of contamination of the surface (2).

3. The method in accordance with one of the preceding claims, **characterised in that** one or a plurality of cleaning activities are defined in terms of time of execution, frequency of repetition, and/or number of repetitions.

4. The method in accordance with claim 3, **characterised in that** the user allocates to a surface zone (5, 6, 7, 8) that has a level of contamination above a threshold value, a frequency of repetition that is higher than a standard frequency of repetition, and/or an increased cleaning intensity compared to a standard cleaning intensity, and/or the user allocates to a surface zone (5, 6, 7, 8) that has a level of contamination below a threshold value, a frequency of repetition that is lower than a standard frequency of repetition, and/or a reduced cleaning intensity compared to a standard cleaning intensity.

5. The method in accordance with one of the claims 1 to 4, **characterised in that** the user creates a work schedule, which contains successive cleaning tasks in terms of time in a plurality of surface zones (5, 6, 7, 8).

6. The method in accordance with one of the claims 1 to 4, **characterised in that**, a cleaning activity in a first surface zone (5, 6, 7, 8) is executed in terms of time and organization independently of cleaning activities in other surface zones (5, 6, 7, 8) .

7. The method in accordance with one of the preceding claims, **characterised in that** the map (4) is displayed to the user on an external terminal device (9), and the user undertakes editing of the map (4) by way of the external terminal device (9).

8. The method in accordance with one of the preceding claims, **characterised in that** those surface zones (5, 6, 7, 8) to which a cleaning task has been assigned by the user are cleaned in terms of time before surface zones (5, 6, 7, 8) to which no cleaning task has been assigned, and/or **in that** a cleaning task assigned to a surface zone (5, 6, 7, 8) is prevented from being altered, deleted, or overwritten, without the user's intervention.

9. A cleaning appliance (1) automatically moving within an environment, which is designed to clean a surface (2) in accordance with a predetermined work schedule, wherein the cleaning appliance (1) has a detection device (3) for purposes of detecting a level of contamination of the surface (2), and wherein the cleaning appliance is equipped to access a map (4) associated with positional information of the environment, **characterised in that** the cleaning appliance (1) is designed for purposes of executing a method in accordance with one of the preceding claims.

## Revendications

1. Procédé pour faire fonctionner un dispositif de nettoyage (1) se déplaçant automatiquement dans un environnement, dans lequel le dispositif de nettoyage (1) nettoie une surface (2) selon un plan de travail prédéterminé, dans lequel au moins un degré de salissure de la surface (2) est déterminé et une tâche de nettoyage est commandée en fonction du degré de salissure, dans lequel le degré de salissure est entré dans une carte (4) liée à des informations de position de l'environnement, dans lequel un utilisateur effectue un traitement de la carte (4), à savoir définit des sous-régions de surface (5, 6, 7, 8) de la surface (2) dans la carte (4) et attribue manuellement une tâche de nettoyage du dispositif de nettoyage (1) à au moins une sous-région de surface (5, 6, 7, 8), **caractérisé en ce que** l'utilisateur définit une position des sous-régions de surface (5, 6, 7, 8) et détermine en outre une forme et/ou une taille des sous-régions de surface (5, 6, 7, 8) .

2. Procédé selon la revendication 1, **caractérisé en ce qu'**un dispositif de détection (3) du dispositif de nettoyage (1) détecte un degré de salissure de la surface (2).

3. Procédé selon l'une des revendications précédentes, **caractérisé en ce qu'**une ou plusieurs opérations de nettoyage sont définies en termes de moment d'exécution, de fréquence de répétition et/ou de nombre de répétitions.

4. Procédé selon la revendication 3, **caractérisé en ce que** l'utilisateur attribue à une sous-région de surface (5, 6, 7, 8), qui présente un degré de salissure supérieur à une valeur limite, une fréquence de répétition qui est augmentée par rapport à une fréquence de répétition standard et/ou une intensité de nettoyage qui est augmentée par rapport à une intensité de nettoyage standard, et/ou que l'utilisateur attribue une sous-zone de surface (5, 6, 7, 8), qui présente une salissure inférieure à une valeur limite, une fréquence de répétition inférieure à une fréquence de répétition standard et/ou une intensité de nettoyage inférieure à une intensité de nettoyage standard.

5. Procédé selon l'une des revendications 1 à 4, **caractérisé en ce que** l'utilisateur établit un plan de travail qui comprend des tâches de nettoyage dans plusieurs sous-régions de surface (5, 6, 7, 8) qui se succèdent dans le temps.

6. Procédé selon l'une des revendications 1 à 4, **caractérisé en ce qu'**une activité de nettoyage dans une première sous-région de surface (5, 6, 7, 8) est effectuée indépendamment des activités de nettoyage dans d'autres sous-régions de surface (5, 6, 7, 8) en termes de temps et d'organisation.

7. Procédé selon l'une des revendications précédentes, **caractérisé en ce que** la carte (4) est affichée à l'utilisateur sur un terminal externe (9) et que l'utilisateur effectue un traitement de la carte (4) via le terminal externe (9).

8. Procédé selon l'une des revendications précédentes, **caractérisé en ce que** les sous-régions de surface (5, 6, 7, 8) auxquelles une tâche de nettoyage a été attribuée par l'utilisateur sont nettoyées chronologiquement avant les sous-régions de surface (5, 6, 7, 8) auxquelles aucune tâche de nettoyage n'a été attribuée, et/ou qu'il est empêché qu'une tâche de nettoyage attribuée à une sous-région de surface (5, 6, 7, 8) soit modifiée, supprimée ou écrasée sans l'intervention de l'utilisateur.

9. Dispositif de nettoyage (1) qui se déplace automatiquement dans un environnement et qui est conçu pour nettoyer une surface (2) selon un plan de travail prédéterminé, dans lequel le dispositif de nettoyage (1) comporte un dispositif de détection (3) pour détecter un degré de salissure de la surface (2) et dans lequel le dispositif de nettoyage est conçu pour accéder à une carte (4) liée à des informations de position de l'environnement, **caractérisé en ce que** le dispositif de nettoyage (1) est conçu pour exécuter un procédé selon l'une des revendications précédentes.
